# EUROPÄISCHE PATENTSCHRIFT

(11) **EP 1 854 767 B1**
(45) Veröffentlichungstag und Bekanntmachung des Hinweises auf die Patenterteilung: **09.07.2008**
(21) Anmeldenummer: 06009095.8
(22) Anmeldetag: 02.05.2006
(51) Int. Cl.: C02F 11/12

(54) **Querverteilungsvorrichtung für Feuchtgut**
Device for transverse distribution of moist material
Dispositif de répartition transversale de matériau humide

(43) Veröffentlichungstag der Anmeldung: 14.11.2007
(73) Patentinhaber: Kraus, Karl, 79777 Ühlingen-Birkendorf (DE); Kraus, Oliver, 79777 Ühlingen-Birkendorf (DE)
(72) Erfinder: Kraus, Karl, 79777 Ühlingen-Birkendorf (DE); Kraus, Oliver, 79777 Ühlingen-Birkendorf (DE)
(74) Vertreter: Hössle Kudlek & Partner

(56) Entgegenhaltungen:
- DE-A1- 2 528 391
- DE-U1- 9 307 012
- DE-U1- 9 419 080

## Beschreibung

Die vorliegende Erfindung betrifft eine Querverteilungsvorrichtung für Feuchtgut und ein Verfahren zum Verteilen von Feuchtgut.

Auf dem Gebiet der Trocknung, insbesondere auf dem Gebiet der Trocknung von Feuchtgut oder Klärschlamm, sind verschiedene Trocknungsvorrichtungen bekannt. Üblicherweise ist in einer solchen Vorrichtung ein Bereich vorgesehen, in den das Feuchtgut zum Trocknen eingebracht wird. Das Feuchtgut wird an einer Seite des Bereiches eingegeben und entlang der Länge des Bereiches mittels einer geeigneten Einrichtung, in der Regel einem Förderband, fortbewegt.

Die Druckschrift DE 201 07 576 U1 beschreibt eine solche Vorrichtung zur Trocknung von Feuchtgut. In der beschriebenen Vorrichtung wird das Feuchtgut mittels warmer Trocknungsluft, die von unten in das Feuchtgut geblasen wird, getrocknet. Zusätzlich ist ein Schaufelwender vorgesehen, der das Feuchtgut durchmengt und auflockert, um eine bessere Trocknung des Feuchtguts bereitzustellen. Der Schaufelwender ist entlang der Länge des Bereichs verfahrbar, um das Feuchtgut an jeder beliebigen Stelle des Bereichs zu wenden. Wenn das Feuchtgut über die gesamte Länge des Bereichs transportiert wurde, ist es getrocknet und wird mittels eines zweiten Förderbandes in einen Vorratsbehälter für das getrocknete Feuchtgut verbracht.

Um bei solchen Anlagen zur Trocknung von Feuchtgut eine möglichst effiziente Auslastung der Anlage zu gewährleisten, muss das Feuchtgut gleichmäßig über die gesamte Bereite des Bereichs der Anlage verteilt sein. Die Verteilung des Feuchtguts erfolgte bisher manuell, was jedoch einen hohen Zeitaufwand erfordert und somit hohe Personalkosten mit sich bringt. Daher wurden verschiedene Versuche unternommen, automatisierte Verteilungsvorrichtungen zu konstruieren, die automatisch eine optimale Verteilung des Feuchtguts gewährleisten.

Die Druckschrift DE 94 19 080 U1 zeigt eine Vorrichtung zur gleichmäßigen Aufbringung von Stoffen auf eine Aufgabefläche, insbesondere von flüssigkeitsenthaltenden Stoffen pastöser oder krümeliger Konsistenz auf ein Förderband oder ein Siebband einer Presse zur Entwässerung solcher Stoffe, unter Verwendung eines parallel und oberhalb zur Aufgabefläche gehaltenen Förderelementes, die dadurch gekennzeichnet, dass das Förderelement zumindest teilweise derart umschlossen oder begrenzt ist, und dass an seiner der Aufgabefläche zugewandten Seite eine Aufgabeöffnung gebildet ist, durch die der eingangsseitig eingegebene Stoff auf der Aufgabefläche verteilt wird.

Die Druckschrift DE 2528391 A1 zeigt einen Bodanband-Bunker, der dadurch gekennzeichnet ist, dass zum Schütten gleichmäßiger Schichten einer Briete, die der Briete des Bunkers entspricht, der mittig angeordneten Einfüllöffnung eine zur Längserstreckung des querliegende antreibbare Schnecke vorgesehen ist, die gleiche gegenläufige Schnekkengänge aufweist, dass unter der Schnecke, diese teilweise umfassend ein Schieber mit verstellbarem Hub angeordnet ist, dessen Länge geringer ist als die halbe Breite des Bunkers bzw. die halbe Länge der Schnecke, dass die Endlagen des hin und her bewegbaren Schiebers mit Abstand von den Seitenwänden des Bunkers vorgesehen sind, und dass die mittlere Bewegungsgeschwindigkeit des Schiebers etwa halb so groß ist wie die Fördergeschwindigkeit der Schneckengänge.

Die Druckschrift DE 9307012 U1 offenbart eine Vorrichtung zur Verteilung von Schlamm. Die beschriebene Vorrichtung offenbart eine Schnecke, die über einem Förderband angeordnet ist. Ein zu verteilender Schlamm wird unter Beachtung der Förderrichtung des Förderbandes vor der Schnecke auf das Förderband gegeben und dann von dem Förderband durch die Schnecke bewegt. Die Schnecke ist so ausgebildet, dass sie den Schlamm auf dem Förderband von innen nach außen transportiert und den Schlamm so auf dem Förderband verteilt. Die Schnecke ist des weiteren höhenverstellbar und wirkt mit einem nach der Schnecke angeordneten Blech zusammen, um eine Einstellmöglichkeit hinsichtlich der Höhe des auf dem Förderband befindlichen Schlamms bereitzustellen. Zusätzlich ist eine Sensorik vorgesehen, die die Schlammhöhe nach der Schnecke erfasst, um einen Regelkreis zum Einstellen der Schlammhöhe vorzusehen.

Durch die beschriebene Vorrichtung kann das Problem eines gleichmäßigen Verteilens des Feuchtguts oder Schlamms jedoch nicht zufriedenstellen gelöst werden. Die Geschwindigkeiten des Förderbandes und der Schnecke müssen genau aufeinander abgestimmt sein, da die Schnecke ansonsten zuwenig oder zuviel Schlamm nach außen fördert und keine gleichmäßige Verteilung vorliegt. In Abhängigkeit von dem zu verteilenden Material kann die Zufuhr des Materials auf das Förderband auch unregelmäßig erfolgen, so dass die Schnecke ihre Rotationsgeschwindigkeit ständig ändern müsste, um eine optimale Verteilung zu gewährleisten. Das Problem der Querverteilung wird folglich nicht zufriedenstellend gelöst.

Dementsprechend werden eine Querverteilungsvorrichtung für Feuchtgut nach Anspruch 1 und ein Verfahren zur Verteilung von Feuchtgut nach Anspruch 14 bereitgestellt.

Die erfindungsgemäße Quervexteilungsvorrichtung für Feuchtgut umfasst einen Verteilungskasten, der sich über eine Breite eines Bereichs erstreckt. Der Bereich kann beispielsweise der Bereich des Trockenbetts einer voranstehend beschriebenen Trocknungsvorrichtung sein. Des weiteren umfasst die erfindungsgemäße Querverteilungsvorrichtung eine Befüllungseinrichtung, die zum direkten Befüllen des Verteilungskastens mit dem Feuchtgut ausgestaltet ist, und eine Fördereinrichtung, die das Feuchtgut über die gesamte Erstreckung des Verteilungskasten fördert. Letztlich umfasst die Querverteilungsvorrichtung eine Entleerungseinrichtung, die eine Entleerung des Feuchtguts aus dem Verteilungskasten bewirkt.

Durch die erfindungsgemäße Querverteilungsvorrichtung wird gegenüber dem Stand der Technik der Vorteil bereitgestellt, dass das Feuchtgut zunächst in einen Verteilungskasten einzufüllen ist, und dort mittels der Fördereinrichtung solange verteilt werden kann, bis eine zufriedenstellende Querverteilung erreicht ist. Erst dann wird das Feuchtgut mittels der Entleerungseinrichtung aus dem Verteilungskasten entleert. Die Entleerung erfolgt beispielsweise auf das Trockenbett einer voranstehend beschriebenen Trocknungsvorrichtung. So ist stets sichergestellt, dass das Feuchtgut, das in das Trockenbett gelangt, zufriedenstellend über die gesamte Breite des Trockenbetts verteilt ist.

Die erfindungsgemäße Befüllungseinrichtung kann ein Trichter sein, der in den Verteilungskasten mündet.

Als Fördereinrichtung kann eine Schnecke vorgesehen sein. Die Schnecke ist in dem Verteilungskasten angeordnet und kann so ausgebildet sein, dass sie lediglich in einer Richtung fördert, oder auch dazu ausgelegt sein, in zwei Richtungen, beispielsweise von innen nach außen, zu fördern. Entsprechend ist die Befüllungseinrichtung an den Verteilungskasten angebracht. Grundsätzlich ist die Position der Befüllungseinrichtung so mit der Schnecke abzustimmen, dass das Feuchtgut durch die Befüllungseinrichtung an den Beginn des Förderweges der Schnecke eingefüllt wird.

Wird als Fördereinrichtung eine Schnecke verwendet, kann als Entleerungseinrichtung eine Radialklappe vorgesehen sein, die den Verteilungskasten an seiner Unterseite verschließt. Durch Aufschwenken der Radialklappe fällt das Feuchtgut somit nach unten und der Verteilungskasten wird entleert.

Durch die Verwendung einer Radialklappe als Entleerungseinrichtung wird unter anderem der Vorteil erreicht, dass bei Öffnen der Radialklappe das Feuchtgut am Rand des Verteilungskastens abgestreift wird und somit kein Feuchtgut an der Klappe haften bleibt. Somit fällt bei Öffnen der Radialklappe das gesamte Feuchtgut aus dem Verteilungskasten. Weitere Vorteile der Radialklappe werden nachfolgend in der detaillierten Beschreibung erläutert.

In einer Ausführungsform der Erfindung kann als Entleerungseinrichtung eine sich nach unten öffnende Klappe vorgesehen sein, die den Verteilungskasten an seiner Unterseite verschließt.

Die Fördereinrichtung kann des weiteren als Förderband ausgestaltet sein. Die Position der Befüllungseinrichtung ist entsprechend der Förderrichtung des Förderbandes zu wählen. Das Förderband ist in dem Verteilungskasten angeordnet und fördert das Feuchtgut über die Breite des Verteilungskasten.

Als Entleerungseinrichtung kann vorgesehen sein, dass das Förderband an seinen Längsachsen drehbar ist. Auf diese Weise kann das Förderband beispielsweise um 90° oder auch 180° gedreht und das Feuchtgut aus dem Verteilungskasten entleert werden.

Bei einigen zu verteilenden Materialien kann es unerwünscht sein, dass das Material durch die Schnecke zerkleinert wird. Grundsätzlich ist für die Trocknung ein möglichst grobstückiges Material günstig. Bei vornehmlich festen Materialien, die bereits grobstückig in den Verteilungskasten eingefüllt werden, würde das Material durch die Schnecke unnötig verfeinert. In diesem Fall erhält ein Förderband die Struktur des eingefüllten Materials und begünstigt somit die Trocknung.

Die erfindungsgemäße Querverteilungsvorrichtung weist eine Befüllungssensorik auf, die erfasst, ob das Feuchtgut in einer bestimmten Höhe und/oder über die Erstreckung des Verteilungskasten in dem Verteilungskasten vorhanden ist. Es kann vorgesehen sein, dass die Entleerungseinrichtung das Feuchtgut automatisch entleert, wenn es in einer bestimmten Höhe und über die Erstreckung des Verteilungskastens verteilt ist.

Auf diese Weise ist es möglich, dass die Querverteilungsvorrichtung vollständig automatisiert arbeitet und ein eingefülltes Feuchtgut automatisch gleichmäßig verteilt ausgibt. Neben den Parametern einer bestimmten Feuchtguthöhe können mittels einer solchen Regelung auch andere Parameter, beispielsweise Zeitintervalle, vorgegeben werden, in denen Feuchtgut aus der Querverteilungsvorrichtung entleert wird.

Die Ausgestaltung des Verteilungskastens kann abhängig von der vorgesehenen Fördereinrichtung sein. Wird als Fördereinrichtung eine Schnecke verwendet, so kann der Verteilungskasten geschlossen ausgeführt sein. Ist als Fördereinrichtung ein Förderband vorgesehen, so kann der Verteilungskasten nach oben offen ausgelegt sein.

Der Verteilungskasten kann des weiteren über die Länge des Bereichs verfahrbar sein. Analog zu dem in der DE 201 07 576 U1 beschriebenen verfahrbaren Schaufelwender kann der Verteilungskasten über die Länge eines Bereichs, beispielsweise eines Trocknungsbetts, verfahrbar sein. Grundsätzlich kann die Querverteilungsvorrichtung zusammen mit dem Schaufelwender oder aber separat von dem Schaufelwender verfahrbar sein. Auf diese Weise ist es möglich, die Querverteilungsvorrichtung an einer beliebigen Stelle zu befüllen und das Feuchtgut an einer beliebigen Stelle zu entleeren. Somit ist man nicht mehr auf bestimmte Befüllungs- und Entleerungspositionen beschränkt.

Es kann des weiteren eine Mechanik bereitgestellt sein, die ein automatisches Entleeren des Feuchtguts mittels Auslösens der Entleerungseinrichtung in einer bestimmten Position der Querverteilungsvorrichtung bewirkt. Beispielsweise kann an der Querverteilungsvorrichtung ein Hebel oder Stab vorgesehen sein, der in einer bestimmten Position der Querverteilungsvorrichtung gedrückt oder aktuiert wird und die Entleerungseinrichtung so bewegt, dass das Feuchtgut aus dem Verteilungskasten entleert wird. So kann beispielsweise ein Aufschwenken der Radialklappe oder ein Kippen des Förderbandes bewirkt werden, wenn die Querverteilungsvorrichtung eine bestimmte Position erreicht.

Durch eine derartige Mechanik wird der Vorteil erreicht, dass kein separater Motor zum Betätigen der Entleerungseinrichtung benötigt wird.

Erfindungsgemäß kann eine Entleerungssensorik vorgesehen sein, die ein automatisches Entleeren des Feuchtguts mittels Auslösens der Entleerungseinrichtung in einer bestimmten Position der Querverteilungsvorrichtung bewirkt. Eine derartige Sensorik kann die Position der Querverteilungsvorrichtung erfassen und beispielsweise ein Signal an einen Motor ausgeben, der ein Aufschwenken der Radialklappe oder ein Kippen des Förderbandes bewirkt. Auf diese Weise ist es möglich, das Feuchtgut an einer beliebig eingestellten Position zu entleeren.

Das erfindungsgemäße Verfahren zum Verteilen von Feuchtgut umfasst zunächst den Schritt des Befüllens des Verteilungskastens, der sich über eine Breite eines Bereichs erstreckt, mittels einer Befüllungseinrichtung, die zum direkten Befüllen des Verteilungskastens mit dem Feuchtgut ausgestaltet ist. Daraufhin erfolgt ein Schritt des Förderns des Feuchtguts mittels einer Fördereinrichtung, die das Material über die gesamte Erstreckung des Verteilungskastens fördert. Letztlich erfolgt daraufhin ein Schritt des Entleerens des Feuchtguts mittels einer Entleerungseinrichtung, die eine Entleerung des Feuchtguts aus dem Verteilungskasten bewirkt.

Auch stellt das erfindungsgemäße Verfahren den Vorteil bereit, dass das Feuchtgut zunächst in einem Verteilungskasten gefördert und dadurch gleichmäßig über die Breite des Bereichs verteilt wird, bevor es letztlich in den Bereich entleert wird. Somit ist auch mittels des erfindungsgemäßen Verfahrens sichergestellt, dass gleichmäßig verteiltes Feuchtgut in den Bereich, beispielsweise das Trockenbett einer Trocknungsvorrichtung, gelangt.

Auch bei dem erfindungsgemäßen Verfahren kann vorgesehen sein, dass die Befüllungseinrichtung ein Trichter ist, der in den Verteilungskasten mündet.

Des weiteren kann das Verfahren so ausgestaltet sein, dass das Feuchtgut mittels einer Schnecke in den Verteilungskasten gefördert wird. Die Schnecke kann zudem höhenverstellbar sein. Als Entleerungseinrichtung kann dann eine Radialklappe vorgesehen sein, die den Verteilungskasten an seiner Unterseite verschließt.

Des weiteren kann bei dem erfindungsgemäßen Verfahren vorgesehen sein, dass das Feuchtgut in den Verteilungskasten mittels eines Förderbandes gefördert wird. Zum Entleeren kann dabei vorgesehen sein, dass das Förderband um seine Längsachse gedreht wird.

Bei dem erfindungsgemäßen Verfahren kann vorgesehen sein, dass das Feuchtgut automatisch entleert wird, wenn es in einer bestimmten Höhe und über die Erstreckung des Verteilungskastens verteilt wurde. Der Zeitpunkt des Entleerens kann dabei mittels einer Sensorik ermittelt werden, die die Verteilung und die Höhe des Feuchtguts in dem Verteilungskasten erfasst.

Des weiteren kann nach dem Befüllen des Verteilungskasten und vor dem Entleeren des Feuchtguts aus dem Verteilungskasten ein Schritt vorgesehen sein, in dem der Verteilungskasten in Längsrichtung des Bereichs verfahren wird.

Es kann eine Mechanik vorgesehen sein, die auf den verfahrbaren Verteilungskasten während der Bewegung des Verteilungskastens einwirkt und automatisch eine Entleerung des Feuchtguts aus dem Querverteilungskasten bewirkt.

Des weiteren kann eine Entleerungssensorik vorgesehen sein, die die Position des Verteilungskasten erfasst und das Entleeren des Feuchtguts in einer bestimmten Position automatisch veranlaßt. Dies kann beispielsweise mittels eines Motors geschehen, der zum Betätigen der Entleerungseinrichtung vorgesehen ist.

Die erfindungsgemäße Querverteilungsvorrichtung und das erfindungsgemäße Verfahren zum Verteilen ist insbesondere für Feuchtgut geeignet. Es kann grundsätzlich jedoch auch für jedes andere Material oder Produkt verwendet werden. Es eignet sich insbesondere auch zum Verteilen von Pflanzenabfällen, bspw. Holzhackschnitzel, Sägemehl, Klärschlamm oder Getreide.

Weitere Vorteile und Ausgestaltungen der Erfindung ergeben sich aus der Beschreibung und der beiliegenden Zeichnung.

Die Erfindung ist anhand eines Ausführungsbeispieles in der Zeichnung schematisch dargestellt und wird im folgenden unter Bezugnahme auf die Zeichnung ausführlich beschrieben.

Figur 1 zeigt eine Seitenansicht einer erfindungsgemäßen Querverteilungsvorrichtung in einer ersten Ausführungsform.

Figur 2 zeigt eine Querschnittsansicht der erfindurzgsgemäßen Querverteilungsvorrichtung in einer ersten Ausführungsform entlang einer Linie II-II in Figur 1.

Figur 3 zeigt eine Perspektivansicht einer erfindungsgemäßen Querverteilungsvorrichtung in einer ersten Ausführungsform.

Figur 4 zeigt eine Seitenansicht einer erfindungsgemäßen Querverteilungsvorrichtung in einer zweiten Ausführungsform.

Figur 5 zeigt eine Querschnittsansicht einer erfindungsgemäßen Querverteilungsvorrichtung einer zweiten Ausführungsform entlang einer Linie V-V in Figur 4.

Figur 6 zeigt eine Perspektivansicht einer erfindungsgemäßen Querverteilungsvorrichtung in einer zweiten Ausführungsform.

Figur 7 zeigt eine Kopfansicht einer erfindungsgemäßen Querverteilungsvorrichtung in einer dritten Ausführungsform.

Figur 8 zeigt eine Querschnittsansicht einer erfindungsgemäßen Querverteilungsvorrichtung in einer dritten Ausführungsform entlang einer Linie VIII-VIII in Figur 7.

Figur 9 zeigt eine Perspektivansicht einer erfindungsgemäßen Querverteilungsvorrichtung in einer dritten Ausführungsform.

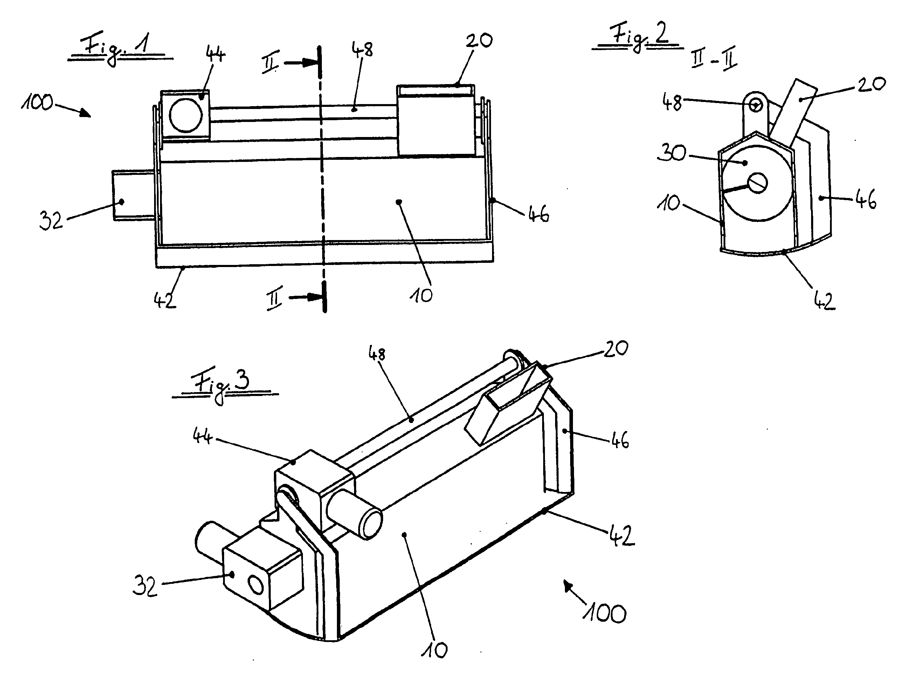

Die Figuren 1 bis 3 zeigen eine erfindungsgemäße Querverteilungsvorrichtung 100 in einer ersten Ausführungsform. Die erste Ausführungsform der Erfindung umfasst eine Schnecke 30, die als Fördereinrichtung vorgesehen ist. Die Schnecke 30 ist in einem Verteilungskasten 10 angeordnet, der geschlossen ausgebildet ist. Zum Befüllen des Verteilungskastens ist ein Trichter 20 vorgesehen, der in den Verteilungskasten 10 mündet und ein direktes Befüllen des Verteilungskastens 10 ermöglicht.

Der Verteilungskasten 10 ist an seiner Unterseite mittels einer Radialklappe 42 verschlossen. Die Radialklappe 42 wird von zwei Hebelarmen 46 gehalten, die mittels einer Welle 48 verbunden sind. Auf der Welle 48 ist des weiteren ein Motor 44 vorgesehen, der ein Elektromotor sein kann, und eine Drehung der Welle 48 und somit ein Auf- bzw. Zuschwenken der Radialklappe 42 bewirken kann. Die Hebel 46 sind des weiteren so ausgestaltet, dass durch die Erdanziehungskraft stets ein Zuschwenken der Radialklappe 42 bewirkt wird.

Beim Aufschwenken der Radialklappe 42 wird in dem Verteilungskasten 10 befindliches Feuchtgut automatisch an dem Verteilungskasten 10 abgestreift. Die Passung des Verteilungskastens 10 an der Radialklappe 42 kann vorteilhafterweise so ausgestaltet sein, dass keine Dichtung zwischen dem Verteilungskasten 10 und der Radialklappe 42 nötig ist. Dadurch, dass die Radialklappe 42 aufgrund der Ausgestaltung ihrer Hebel 46 durch die Erdanziehungskraft in einer geschlossenen Position gehalten wird, ist des weiteren keine separate Verriegelungsmechanik für die Radialklappe nötig, was einen Vorteil gegenüber dem Stand der Technik darstellt.

Des weiteren ist ein zweiter Motor 32 zum Antrieb der Schnecke 30 vorgesehen.

Die erfindungsgemäße Querverteilungsvorrichtung 100 in der ersten Ausführungsform wird somit zunächst durch den Trichter 20 mit Feuchtgut befüllt, das so in den Verteilungskasten 10 gelangt. Die Radialklappe 52 befindet sich dabei in einer geschlossenen Position. Mittels einer geeigneten Sensorik (nicht dargestellt) wird die Verteilung und Höhe des Feuchtguts in dem Verteilungskasten 10 erfasst und eine Drehung der Schnecke 30 ausgelöst. Die Schnecke 30 fördert das Feuchtgut nun über die Breite des Verteilungskastens 10, bis der gesamte Hohlraum zwischen der Schnecke 30 und der Radialklappe 52 mit Feuchtgut gefüllt ist.

Ist die gewünschte Verteilung und Höhe des Feuchtguts erreicht, wird mittels des Motors 44 ein Aufschwenken der Radialklappe 42 bewirkt und das Feuchtgut fällt aus dem Verteilungskasten heraus, bis dieser vollständig entleert ist.

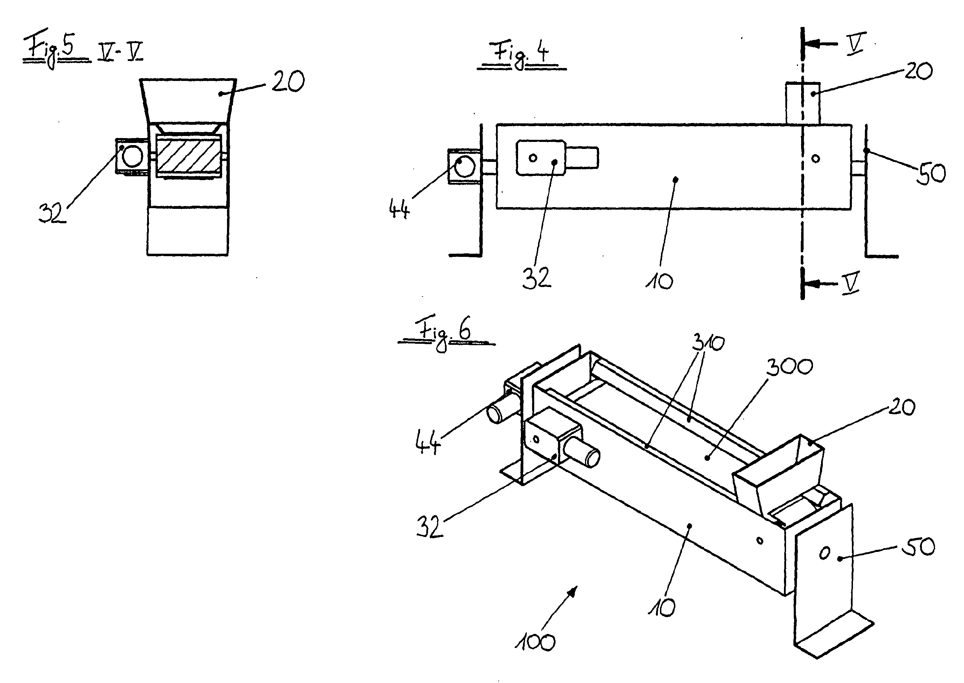

Die Figuren 4 bis 6 stellen die erfindungsgemäße Querverteilungsvorrichtung in einer zweiten Ausführungsform dar.

In der zweiten Ausführungsform ist als Fördereinrichtung ein Förderband 300 vorgesehen. Der Verteilungskasten 10 ist in der zweiten Ausführungsform nicht geschlossen sondern nach oben offen ausgebildet. Ebenso weist der Verteilungskasten 10 keinen Boden auf, der Boden wird durch das Förderband 300 selbst gebildet. Als seitlicher Abschluss des Förderbands 300 sind Führungsleisten 310 vorgesehen. Der Verteilungskasten 10 ist in einer geeigneten Höhe über dem zu befüllenden Bereich mittels Stützen 50 gelagert. Zum Antrieb des Förderbands 300 dient ein Motor 32. Zum Befüllen der Querverteilungsvorrichtung 100 ist ein Trichter 20 vorgesehen.

Das Förderband 300 ist um seine Längsachse schwenkbar gelagert und kann mittels eines Motors 44 gedreht werden.

Im Betrieb wird die Querverteilungsvorrichtung 100 in der zweiten Ausführungsform über den Trichter befüllt. Dabei wird das Förderband 300 mittels des Motors 32 mit konstanter Geschwindigkeit bewegt. In diesem Fall finden die Schritte des Befüllens und des Förderns gleichzeitig statt. Indem stets eine konstante Menge Feuchtgut durch den Trichter 20 eingefüllt und das Förderband 300 mit konstanter Geschwindigkeit bewegt wird, ergibt sich eine gleichmäßige Verteilung des Feuchtguts auf dem Förderband 300. Ist das Feuchtgut über die ganze Breite des Verteilungskasten 100 verteilt, wird das Förderband 300 gestoppt. Der Entleerungsvorgang erfolgt nun, indem mittels des Motors 44 das Förderband 300 mindestens um 90° um seine Längsachse gedreht wird, so dass das Feuchtgut aus dem Verteilungskasten 10 nach unten fällt.

In einer Ausführungsform der Erfindung wird die Höhe des Feuchtguts auf dem Förderband 300 durch einen Zwischenraum zwischen dem Förderband 300 und dem Trichter 20 bestimmt. Dieser Zwischenraum kann durch eine Höhenverstellbarkeit des Förderbands 300 und/oder des Trichters 20 einstellbar ausgestaltet sein. Beim Befüllen wird das Förderband 300 mittels des Motors 32 mit einer solchen Geschwindigkeit bewegt, dass das Feuchtgut höher im Trichter 20 steht, als der Zwischenraum zwischen Trichter 20 und Förderband 300 hoch ist. Eine Sensorik (nicht dargestellt) schaltet bei Unterschreitung einer Mindestfüllhöhe des Feuchtguts im Trichter 20 das Förderband 300 solange ab, bis die Mindestfüllhöhe wieder erreicht ist. Der Entleerungsvorgang erfolgt dann, wie er bereits beschrieben wurde.

Aufgrund der Verwendung eines Förderbandes 300 als Fördereinrichtung in der zweiten Ausführungsform der Erfindung, findet keine mechanische Bearbeitung des Feuchtguts statt. Die Struktur des Feuchtguts bleibt somit erhalten, was, wie voranstehend bereits beschrieben wurde, vorteilhaft bei der Trocknung sein kann. Des weiteren ist kein geschlossener Verteilungskasten 10 notwendig, da kein Feuchtgut nach oben aus dem Verteilungskasten 10 spritzen kann.

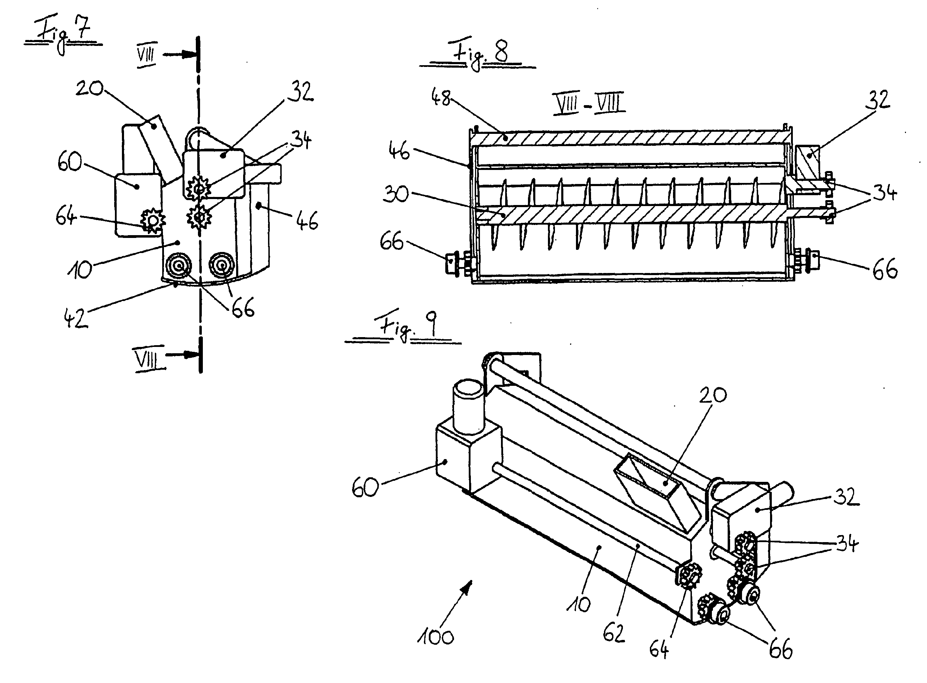

Die Figuren 7 bis 9 zeigen die erfindungsgemäße Querverteilungsvorrichtung in einer dritten Ausführungsform.

Die dritte Ausführungsform ähnelt der in den Figuren 1 bis 3 dargestellten ersten Ausführungsform insofern, als dass als Fördereinrichtung eine Schnecke 30 vorgesehen ist, die über einen Motor 32 angetrieben wird. Die Kraftübertragung vom Motor 32 auf die Schnecke 30 erfolgt mittels zweier Ritzel 34 eines geeigneten kraftübertragenden Endloselements.

Die Befüllung des Verteilungskastens 10 erfolgt in einer dritten Ausführungsform mittels eines Trichters 20.

Der Verteilungskasten 10 ist auch in einer dritten Ausführungsform nach unten durch eine Radialklappe 42 geschlossen, die über Hebel 46 an einer Welle 48 aufgehangen und verschwenkbar gelagert ist.

Im Gegensatz zu der Querverteilungsvorrichtung 100 in der ersten Ausführungsform ist die Querverteilungsvorrichtung 100 in der dritten Ausführungsform jedoch verfahrbar ausgebildet. Dazu sind Ritzel-Rollen-Kombinationen 66 vorgesehen, mit denen die Querverteilungsvorrichtung 100 auf einer geeigneten Lauffläche (nicht dargestellt) gelagert werden kann. Mittels eines Motors 60, der die Energie über eine Welle 62 und ein Antriebsritzel 64 sowie ein weiteres geeignetes kraftübertragendes Endloselement auf die Ritzel-Rolle-Kombinationen 66 überträgt, kann die Querverteilungsvorrichtung 100 so über die Länge eines zu befüllenden Bereichs verfahren werden.

Zum Öffnen und Schließen der Radialklappe 42 ist eine Mechanik (nicht dargestellt) vorgesehen, die ein Öffnen und Schließen der Radialklappe 42 während des Verfahrens bewirkt. An der Radialklappe 42 können dazu beispielsweise Stäbe oder sonstige Vorsprünge vorgesehen sein, die während des Verfahrens in einer bestimmten Position der Querverteilungsvorrichtung 100 eingehakt oder abgelenkt werden und so bei einem weiteren Verfahren der Querverteilungsvorrichtung 100 ein Aufschwenken der Radialklappe 42 bewirken. Wird die Querverteilungsvorrichtung 100 dann in entgegengesetzter Richtung zurückverfahren, schwenkt die Radialklappe 42 aufgrund der Ausgestaltung der Hebel 46 und der Schwerkraft automatisch in die geschlossene Position zurück. Auf diese Weise kann ist zusätzlicher Motor zum Öffnen und Schließen der Radialklappe 42 nicht notwendig.

Selbstverständlich kann jedoch auch ein dritter Motor zum Öffnen und Schließen der Radialklappe vorgesehen sein, wie in den Figuren 1 bis 3 dargestellt ist.

Im Betrieb wird die Querverteilungsvorrichtung der dritten Ausführungsform zunächst über den Trichter 20 befüllt. In dem Verteilungskasten 10 wird das Feuchtgut dann mittels der Schnecke 30 verteilt. Dabei kann am Verteilungskasten 10 eine Befüllungssensorik (nicht dargestellt) vorgesehen sein, die wie bereits im Zusammenhang mit der ersten Ausführungsform beschrieben wurde, einen Regelkreis mit dem Motor 32 bildet.

Ist eine gleichmäßige Verteilung sichergestellt, wird die Querverteilungsvorrichtung 100 nun mittels des Motors 60 zu einer gewünschten Position verfahren. In der gewünschten Position können Elemente der Mechanik bereitgestellt sein, die ein mechanisches Öffnen und Schließen der Radialklappe 42 aufgrund der Verfahrbewegung der Querverteilungsvorrichtung 100 bewirken, wie voranstehend beschrieben wurde. Alternativ kann ein Öffnen und Schließen der Radialklappe 42 aber auch mittels eines dritten Motors erfolgen.

Des weiteren kann eine Entleerungssensorik (nicht dargestellt) vorgesehen sein, die die Position der Querverteilungsvorrichtung 100 während des Verfahrens erfasst und in einer bestimmten Position das Entleeren des Feuchtguts automatisch veranlaßt. In diesem Falle ist ein dritter Motor zum Öffnen und Schließen der Radialklappe 42 notwendig.

Auf diese Weise wird durch die erfindungsgemäße Querverteilungsvorrichtung 100 ein voll-automatisches Querverteilungssystem bereitgestellt, dass ein eingefülltes Feuchtgut gleichmäßig verteilt an einer beliebigen Stelle eines Bereichs, beispielsweise einem Trockenbett einer Trocknungsvorrichtung, ablagern kann. Ein manuelles Verteilen des Feuchtguts ist nicht mehr notwendig, was eine erhebliche Zeit- und Kostenersparnis mit sich bringt.

Selbstverständlich kann auch eine Ausführungsform mit einem Förderband 300 als Fördervorrichtung verfahrbar ausgestaltet sein.

Voranstehend wurden die einzelnen Verfahrensschritte jeweils automatisiert beschrieben, selbstverständlich können die einzelnen Schritte jedoch auch manuell ausgelöst werden, wozu geeignete Bedienelemente vorgesehen sein können, beispielsweise eine Schalttafel.

Wie bereits erwähnt wurde, wurde die Erfindung voranstehend in Zusammenhang mit der Querverteilung von Feuchtgut beschreiben, kann grundsätzlich jedoch auch für alle Arten von Material, insbesondere zur Verteilung von pflanzlichem Material, verwendet werden.

## Patentansprüche

1. Querverteilungsvorrichtung für Feuchtgut, mit:
einem Verteilungskasten (10), der sich über eine Breite eines Bereichs erstreckt,
einer Befüllungseinrichtung (20), die zum direkten Befüllen des Verteilungskastens (10) mit dem Feuchtgut ausgestaltet ist,
einer Fördereinrichtung (30, 300), die das Feuchtgut über die gesamte Erstreckung des Verteilungskastens (10) fördert, und
einer Entleerungseinrichtung, die eine Entleerung des Feuchtguts aus dem Verteilungskasten (10) bewirkt und die in eine geschlossene Position verbringbar ist, **dadurch gekennzeichnet, dass**
des weiteren eine Befüllungssensorik vorgesehen ist, die erfaßt, ob das Feuchtgut in einer bestimmten Höhe und/oder über die Erstreckung des Verteilungskastens (10) in dem Verteilungskasten (10) vorhanden ist.

2. Querverteilungsvorrichtung nach Anspruch 1, bei der die Befüllungseinrichtung (20) ein Trichter ist, der in den Verteilungskasten (10) mündet.

3. Querverteilungsvorrichtung nach Anspruch 1 oder 2, bei der die Fördereinrichtung (30, 300) eine Schnecke (30) ist.

4. Querverteilungsvorrichtung nach Anspruch 3, bei der die Schnecke (30) höhenverstellbar ist.

5. Querverteilungsvorrichtung nach einem der Ansprüche 1 bis 4, bei der als Entleerungseinrichtung eine Radialklappe (42) vorgesehen ist, die den Verteilungskasten (10) an seiner Unterseite verschließt.

6. Querverteilungsvorrichtung nach einem der Ansprüche 1 bis 4, bei der als Entleerungseinrichtung eine sich nach unten öffnende Klappe vorgesehen ist, die den Verteilungskasten (10) an seiner Unterseite verschließt.

7. Querverteilungsvorrichtung nach Anspruch 1, bei der die Fördereinrichtung (30, 300) ein Förderband (300) ist.

8. Querverteilungsvorrichtung nach Anspruch 7, bei der als Entleerungseinrichtung vorgesehen ist, dass das Förderband (300) um seine Längsachse drehbar ist.

9. Querverteilungseinrichtung nach Anspruch 7 oder 8, bei der die Höhe eines Zwischenraums zwischen dem Trichter 20 und dem Förderband 300 einstellbar ist.

10. Querverteilungsvorrichtung nach Anspruch 1, bei dem die Entleerungseinrichtung das Feuchtgut automatisch entleert, wenn es in einer bestimmten Höhe und über die Erstreckung des Verteilungskastens (10) verteilt ist.

11. Querverteilungsvorrichtung nach einem der Ansprüche 1 bis 9, bei der der Verteilungskasten (10) über die Länge des Bereichs verfahrbar ist.

12. Querverteilungsvorrichtung nach Anspruch 11, bei der eine Mechanik vorgesehen ist, die ein automatisches Entleeren des Feuchtguts mittels Auslösens der Entleerungseinrichtung in einer bestimmten Position der Querverteilungsvorrichtung (100) bewirkt.

13. Querverteilungsvorrichtung nach Anspruch 11, bei der eine Entleerungssensorik vorgesehen ist, die ein automatisches Entleeren des Feuchtguts mittels Auslösens der Entleerungseinrichtung in einer bestimmten Position der Querverteilungsvorrichtung (100) bewirkt.

14. Verfahren zum Verteilen von Feuchtgut, mit den folgenden Schritten:
Befüllen eines Verteilungskastens (10), der sich über eine Breite eines Bereichs erstreckt, mittels einer Befüllungseinrichtung (20), die zum direkten Befüllen des Verteilungskastens (10) mit dem Feuchtgut ausgestaltet ist,
Fördern des Feuchtguts mittels einer Fördereinrichtung (30, 300), die das Material über die gesamte Erstreckung des Verteilungskastens (10) fördert, und
Entleeren des Feuchtguts mittels einer Entleerungseinrichtung, die eine Entleerung des Feuchtguts aus dem Verteilungskasten (10) bewirkt, **dadurch gekennzeichnet, dass**
das Feuchtgut dann entleert wird, wenn es in einer bestimmten Höhe und über die Erstreckung des Verteilungskastens (10) verteilt wurde.

15. Verfahren nach Anspruch 14, bei der die Befüllungseinrichtung (20) ein Trichter ist, der in den Verteilungskasten (10) mündet.

16. Verfahren nach Anspruch 14 oder 15, bei dem die Fördereinrichtung (30, 300) eine Schnecke (30) ist.

17. Verfahren nach Anspruch 16, bei dem die Schnecke (30) höhenverstellbar ist.

18. Verfahren nach einem der Ansprüche 14 bis 17, bei dem als Entleerungseinrichtung eine Radialklappe (42) vorgesehen ist, die den Verteilungskasten (10) an seiner Unterseite verschließt.

19. Verfahren nach Anspruch 14, bei dem die Fördereinrichtung (30, 300) ein Förderband (300) ist.

20. Verfahren nach Anspruch 19, bei dem zum Entleeren vorgesehen ist, dass das Förderband (300) um seine Längsachse gedreht wird.

21. Verfahren nach einem der Ansprüche 14 bis 20, bei dem der Verteilungskasten (10) nach dem Befüllen und vor dem Entleeren des Feuchtguts in Längsrichtung des Bereichs verfahren wird.

22. Verfahren nach Anspruch 21, bei dem das Feuchtgut in einer bestimmten Position des Verteilungskastens (10) durch eine auf die Querverteilungsvorrichtung (100) wirkende Mechanik automatisch entleert wird.

23. Verfahren nach Anspruch 21, bei dem die Position des Verteilungskastens (10) mittels einer Entleerungssensorik während des Verfahren erfaßt wird und das Feuchtgut in einer bestimmten Position automatisch entleert wird.

24. Verfahren nach einem der Ansprüche 14 bis 23, bei dem die Schritte des Befüllens und des Fördern mindestens teilweise gleichzeitig ausgeführt werden.

## Claims

1. A device for transverse distribution of moist material, comprising:
a distribution box (10) which extends over a width of a section;
a filling device (20) which is configured to fill the distribution box (10) directly with the moist material;
a conveying device (30, 300) which conveys the moist material over the entire extent of the distribution box (10); and
a discharge device which causes a discharge of the moist material from the distribution box (10) and which can be moved into a closed position; **characterized in that**
filling sensors are also provided, which detects whether the moist material is present in the distribution box (10) at a specific height and/or over the extent of the distribution box (10).

2. The device for transverse distribution according to claim 1, in which the filling device (20) is a funnel which opens into the distribution box (10).

3. Device for transverse distribution according to claim 1 or 2, in which the conveying device (30, 300) is a (perpetual) screw (30).

4. The device for transverse distribution according to claim 3, in which the screw (13) can be adjusted vertically.

5. The device for transverse distribution according to any one of the claims 1 to 4, in which the discharge device is a radial flap (42) which closes the distribution box (10) on its bottom side.

6. The device for transverse distribution according to any one of the claims 1 to 4, in which the emptying device is a flap which opens downwards and which closes the distribution box (10) on its bottom side.

7. The device for transverse distribution according to claim 1, in which the conveying device (30, 300) is a conveyor belt (300).

8. The device for transverse distribution according to claim 7, in which the conveyor belt (300) is configured to be rotatable about its longitudinal axis in order to function as the discharge device.

9. The device for transverse distribution according to claim 7 or 8, in which the height of a spacing between the hopper (20) and the conveyor belt (300) is adjustable.

10. The device for transverse distribution according to claim 1, in which the discharge device discharges the moist material automatically when the latter has been distributed at a specific height and over the extent of the distribution box (10).

11. The device for transverse distribution according to any one of the claims 1 to 9, in which the distribution box (10) can be moved over the length of the section.

12. The device for transverse distribution according to claim 11, in which a mechanism is provided which effects automatic discharge of the moist material by means of triggering the discharge device in a specific position of the device for transverse distribution (100).

13. The device for transverse distribution according to Claim 11, in which discharge sensors are provided which effect automatic discharge of the moist material by means of triggering the discharge device in a specific position of the device for transverse distribution (100).

14. A method for distributing moist material, comprising the following steps:
filling a distribution box (10) which extends over a width of a section, by means of a filling device (20) which is configured to fill the distribution box (10) directly with the moist material;
conveying the moist material by means of a conveying device (30, 300) which conveys the material over the entire extent of the distribution box (10); and
discharging the moist material by means of a discharge device which discharges the moist material from the distribution box; **characterized in that**
the moist material is discharged when it has been distributed at a specific height and over the extent of the distribution box (10).

15. The method according to claim 14, in which the filling device (20) is a funnel which opens into the distribution box (10).

16. The method according to claim 14 or 15, in which the conveying device (30, 300) is a (perpetual) screw (30).

17. The method according to claim 16, in which the screw (30) can be adjusted vertically.

18. The method according to any one of the claims 14 to 17, in which the discharge device is a radial flap (42) which closes the distribution box (10) on its bottom side.

19. The method according to claim 14, in which the conveying device (30, 300) is a conveyor belt (300).

20. The method according to claim 19, in which, for the purpose of discharging, the conveyor belt (300) is configured to be rotatable about its longitudinal axis.

21. The method according to one of the claims 14 to 20, in which, after filling and before discharging of the moist material, the distribution box (10) is moved in the longitudinal direction of the section.

22. The method according to claim 21, in which the moist material is discharged automatically in a specific position of the distribution box (10) by a mechanism acting on the device for transverse distribution (100).

23. The method according to claim 21, in which the position of the distribution box (10) is detected by means of discharge sensors during the movement, and the moist material is discharged automatically in a specific position.

24. The method according to any one of the claims 14 to 23, in which the steps of filling and conveying are carried out at least partly simultaneously.

## Revendications

1. Dispositif de répartition transversale pour du matériau humide, comprenant :
un caisson de répartition (10) qui s'étend sur une largeur d'une zone,
un dispositif de remplissage (20), qui est conçu pour le remplissage direct du caisson de répartition (10) avec le matériau humide,
un dispositif de transport (30, 300), qui transporte le matériau humide sur l'ensemble de l'extension du caisson de répartition (10), et
un dispositif de vidage, qui entraîne un vidage du matériau humide du caisson de répartition (10) et qui peut être amené dans une position fermée, **caractérisé en ce que**
il est prévu également un capteur de remplissage qui détecte la présence ou non du matériau humide à une hauteur définie et/ou sur l'extension du caisson de répartition (10) dans le caisson de répartition (10).

2. Dispositif de répartition transversale selon la revendication 1, dans lequel le dispositif de remplissage (20) est un entonnoir qui débouche dans le caisson de répartition (10).

3. Dispositif de répartition transversale selon la revendication 1 ou 2, dans lequel le dispositif de transport (30, 300) est une vis sans fin (30).

4. Dispositif de répartition transversale selon la revendication 3, dans lequel la vis sans fin (30) est réglable en hauteur.

5. Dispositif de répartition transversale selon l'une quelconque des revendications 1 à 4, dans lequel un clapet radial (42), qui ferme le caisson de répartition (10) sur son côté inférieur, est prévu en tant que dispositif de vidage.

6. Dispositif de répartition transversale selon l'une quelconque des revendications 1 à 4, dans lequel un clapet s'ouvrant vers le bas, qui ferme le caisson de répartition (10) sur son côté inférieur, est prévu en tant que dispositif de vidage.

7. Dispositif de répartition transversale selon la revendication 1, dans lequel le dispositif de transport (30, 300) est une bande transporteuse (300).

8. Dispositif de répartition transversale selon la revendication 7, dans lequel il est prévu en tant que dispositif de vidage que la bande transporteuse (300) puisse tourner autour de son axe longitudinal.

9. Dispositif de répartition transversale selon la revendication 7 ou 8, dans lequel la hauteur d'un espace intermédiaire entre l'entonnoir (20) et la bande transporteuse (300) est réglable.

10. Dispositif de répartition transversale selon la revendication 1, dans lequel le dispositif de vidage vide automatiquement le matériau humide lorsqu'il est réparti à une hauteur définie et sur l'extension du caisson de répartition (10).

11. Dispositif de répartition transversale selon l'une quelconque des revendications 1 à 9, dans lequel le caisson de répartition (10) est mobile sur la longueur de la zone.

12. Dispositif de répartition transversale selon la revendication 11, dans lequel est prévu un mécanisme qui entraîne un vidage automatique du matériau humide grâce au déclenchement du dispositif de vidage dans une position définie du dispositif de répartition transversale (100).

13. Dispositif de répartition transversale selon la revendication 11, dans lequel est prévu un capteur de vidage qui entraîne un vidage automatique du matériau humide grâce au déclenchement du dispositif de vidage dans une position définie du dispositif de répartition transversale (100).

14. Procédé pour la répartition de matériau humide, comprenant les étapes suivantes consistant à :
Remplir un caisson de répartition (10), qui s'étend sur une largeur d'une zone, grâce à un dispositif de remplissage (20) qui est conçu pour le remplissage direct du caisson de répartition (10) avec le matériau humide,
transporter le matériau humide grâce à un dispositif de transport (30, 300), qui transporte le matériau sur l'ensemble de l'extension du caisson de répartition (10), et
vider le matériau humide au moyen d'un dispositif de vidage qui entraîne un vidage du matériau humide du caisson de répartition (10), **caractérisé en ce que**
le matériau humide est donc vidé quand il a été réparti à une hauteur définie et sur l'extension du caisson de répartition (10).

15. Procédé selon la revendication 14, dans lequel le dispositif de remplissage (20) est un entonnoir qui débouche dans le caisson de répartition (10).

16. Procédé selon la revendication 14 ou 15, dans lequel le dispositif de transport (30, 300) est une vis sans fin (30).

17. Procédé selon la revendication 16, dans lequel la vis sans fin (30) est réglable en hauteur.

18. Procédé selon l'une quelconque des revendications 14 à 17, dans lequel un clapet radial (42), qui ferme le caisson de répartition (10) sur son côté inférieur, est prévu en tant que dispositif de vidage.

19. Procédé selon la revendication 14, dans lequel le dispositif de transport (30, 300) est une bande transporteuse (300).

20. Procédé selon la revendication 19, dans lequel il est prévu en vue du vidage que la bande transporteuse (300) tourne autour de son axe longitudinal.

21. Procédé selon l'une quelconque des revendications 14 à 20, dans lequel le caisson de répartition (10) est déplacé dans le sens longitudinal de la zone après le remplissage et avant le vidage du matériau humide.

22. Procédé selon la revendication 21, dans lequel le matériau humide est vidé automatiquement dans une position définie du caisson de répartition (10) grâce à un mécanisme agissant sur le dispositif de répartition transversale (100).

23. Procédé selon la revendication 21, dans lequel la position du caisson de répartition (10) est détectée grâce à un capteur de vidage pendant le déplacement et le matériau humide est vidé automatiquement dans une position définie.

24. Procédé selon l'une quelconque des revendications 14 à 23, dans lequel les étapes du remplissage et du transport sont exécutées au moins en partie simultanément.
